Europäisches Patentamt

European Patent Office

Office européen des brevets

(11) Publication number: **0 149 039**
**A2**

(12) **EUROPEAN PATENT APPLICATION**

(21) Application number: **84113387.9**

(22) Date of filing: **07.11.84**

(51) Int. Cl.⁴: **F 16 J 15/10**
**F 16 L 55/10, B 65 D 53/02**

(30) Priority: **11.01.84 SE 8400112**

(43) Date of publication of application:
**24.07.85 Bulletin 85/30**

(84) Designated Contracting States:
**AT BE CH DE FR GB IT LI LU NL SE**

(71) Applicant: **Johnson Pump Aktiebolag**
**Box 1436**
**S-701 14 Örebro(SE)**

(72) Inventor: **Ternevid, Jan**
**Varbergagatan 112**
**S-703 51 Örebro(SE)**

(74) Representative: **Hynell, Magnus**
**Hynell Patenttjänst AB Box 236**
**S-683 02 Hagfors(SE)**

(54) O-ring Joint.

(57) An O-ring joint, between a female and a male part which are designed to be able to be displaced telescopically relatively to each other for obtaining a seal, is characterized in that the female part (1) is provided with a groove (7) encircling a cylindrical inner surface thereof, said groove being intended to receive an O-ring (3), the external diameter of which is equal to the outer diameter of the groove, and in that the O-ring is intended to be deformed elastically inside a closed annular space between the male and the female parts in order to seal the joint, said annular space being bounded by the groove of the female part, by an annular surface (15) of the female part which adjoins that side (10) of the groove which is remote from the male part, and by a bevel (12) on the outside of the male part.

FIG. 2

# O-RING JOINT

## TECHNICAL FIELD

This invention concerns an O-ring joint, comprising a female and a male part arranged to be moved telescopically relatively to each other to achieve sealing. The O-ring joint may for example be arranged between the housing and the lid of a pump, but the invention is not limited to this field of application.

## BACKGROUND ART

Within the food industry, pumps, couplings, and other fittings are employed which need to be dismantled and cleaned daily. Systems have also been developed for the automatic dismantling, cleaning, and reassembling of this type of equipment. A basic requirement in this connection is that all parts be easily accessible, so that they may be cleaned efficiently by being washed under pressure. Another requirement is that the O-rings not come loose during the treatment, but rather remain safely in place also after cleaning and reassembly. At the same time it is desirable that the O-rings be easy to dismount manually and easy to put back in place. These requirements have not been met by the existing art.

## DISCLOSURE OF INVENTION

A first object of the invention is to provide a solution to the problems mentioned above, which however does not preclude the use of the invention in cases not involving equipment intended to be dismantled, cleaned, and reassembled. Another purpose of the invention is to provide an O-ring joint which seals efficiently and is easily manufactured.

These and other objects may be attained by the invention being characterized according to the claims to follow.

Further objects and characteristics of the invention will become apparent from the following description of a preferred embodiment.

0149039

BRIEF DESCRIPTION OF DRAWINGS

In the following description of a preferred embodiment reference
will be made to the attached drawings, of which

Fig. 1    shows a part of an axial section of a lid of a pump
with an O-ring mounted therein, and

Fig. 2    shows in a corresponding manner the same lid mounted
onto a pumphouse, with the O-ring performing its
sealing function.

DESCRIPTION OF PREFERRED EMBODIMENT

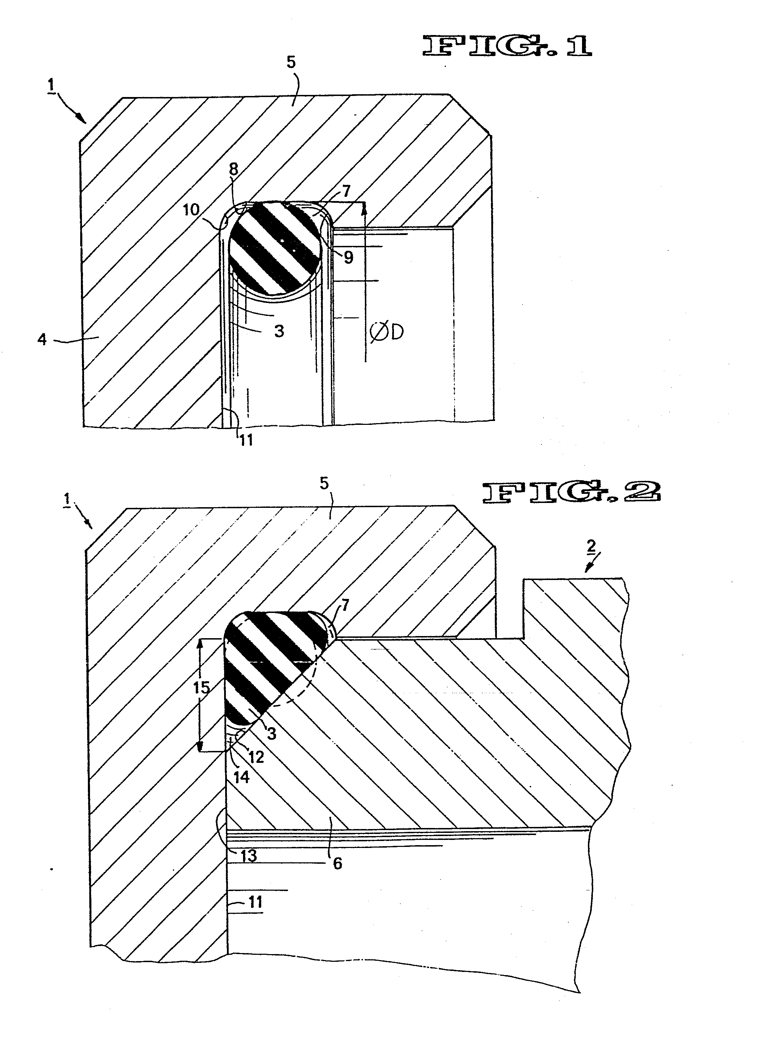

In the figures, a pump lid is designated by numeral 1 and a pump
house by numeral 2. An O-ring is designated 3. The O-ring consists
of a rubber ring with circular section when unstrained, see Fig. 1.
The lid 1 has a central part 4 and a peripheral cylindrical part 5,
which may be slid, telescopically, over a cylindrical end part 6
of the pump house 2. When the joint is sealed, the inside 11 of
the lid 1 is flush against the forward edge 13 of the cylindrical
part 6 of the pump house 2. The pump lid 1 is secured to the pump
house 2 by means of screws of the like, not shown.

A groove 7, intended to receive the O-ring 3, encircles the inside
of the cylindrical part 5 of the lid. The bottom of the groove is
designated 8 and its two side walls 9 and 10. The depth of the
groove 7 is between 1/5 and 1/3 of the thickness of the O-ring 3.
The diameter D of the groove 7 is the same as the outer diameter
of the O-ring 3. The width of the groove 7 is 16 - 13 % larger than
the thickness of the O-ring 3. As is indicated in the drawings,
the sides 9 and 10 are arcuate, so that the side 9 transforms
smoothly into the inside 11 of the central part 4 of the lid 1.
By shaping and dimensioning the groove 7 in relation to the O-ring
3 as described, efficient cleaning of the groove 7 and all parts
of the O-ring 3 by pressure washing is made possible, the O-ring
remaining in place in the groove 7 during cleaning.

When the lid 1 is mounted on the pump house 2 a bevel 12 on the front external edge of the pump house is pressed against the O-ring 3, which is thereby pressed against an annular surface 15 on the inside of the lid 1, said surface being an extension of the outer edge 10 of the groove 7. Simultaneously the O-ring is deformed elastically, as indicated in Fig. 2. This deformation presses the O-ring both axially inward toward the pump house 2 in the groove 7 and radially inward in the wedge-shaped space 14 between the bevel 12 and the annular surface 15, which accomplishes good sealing function and prevents damage to the O-ring.

The O-ring may be removed without using any implements.

CLAIMS

1. O-ring joint between a female and a male part, said parts being designed to be able to be displaced telescopically with relation to each other to obtain a seal, c h a r a c t e r i z e d  in that the female part (1) has a groove (7) for an O-ring (3), said groove being annular and located in an inner cylindrical surface of said female part, said O-ring having an outer diameter (D) equal to the outer diameter of said groove, and in that the O-ring is arranged to be deformed elastically in a closed annular space between the male and the female part, said space being bounded by the groove in the female part, by an annular surface (15) on the female part which adjoins that side (10) of the groove which is remote from the male part, and by a bevel (12) on the external surface of the male part.

2. O-ring joint according to claim 1, c h a r a c t e r i z e d in that the bevel (12) is arranged to be pressed against the O-ring, deforming it mainly axially in the groove in the female part and mainly radially in the wedge-shaped space (14) between the annular surface of the female part and the bevel of the male part.

3. O-ring joint according to claim 1 or 2, c h a r a c t e r i z e d in that the annular surface (15) is a part of a lid, which when performing a sealing function engages the front edge (13) of the male part.

4. O-ring joint according to any of the claims 1 - 3, c h a r a c - t e r i z e d  in that the depth of the groove (7) is between 1/5 and 1/3 of the thickness of the O-ring.

5. O-ring joint according to any of the claims 1 - 4, c h a r a c - t e r i z e d  in that the width of the groove (7) is at least 13 % larger than the thickness of the O-ring.

6. O-ring joint according to any of the claims 1 - 5, c h a r a c - t e r i z e d  in that there is a direct transition from one of

5

0149039

the sides (10) of the groove to said annular surface (15).

7. O-ring joint according to any of the claims 1 - 6, c h a r a c -
t e r i z e d in that there is a direct transition from the other
side (9) of the groove to said bevel (12), when the joint is in
sealed position.

FIG. 1

FIG. 2

0149039